# EUROPEAN PATENT APPLICATION

(11) **EP 3 432 608 A1**
(43) Date of publication of application: **23.01.2019**
(21) Application number: 17182526.8
(22) Date of filing: 21.07.2017
(51) Int. Cl.: H04W 4/02, H04L 29/08

(54) **STATUS INFORMATION IN A COMMUNICATIONS SYSTEM**

(71) Applicant: Mitel Networks Corporation, Ottawa, ON K2K 2W7 (CA)
(72) Inventor: Bociarski, Dobieslaw, Cherrybrook, New South Wales 2126 (AU)
(74) Representative: Sayer, Robert David

(57) **Abstract**

A method is disclosed for providing status information to users of a communications system. The method comprises receiving from a first user equipment, associated with a first user of the communications system, data indicative of a local time zone based on the current location of the first user equipment. The method also comprises providing status data to one or more other user equipment, associated with other users of the communications system, based on the local time zone data for the first user.

## Description

### Field

The present invention relates to methods and systems for providing status information in a communications system, particularly, though not exclusively, a unified communications system.

### Background

A unified communications system is one in which different forms of enterprise communication services are integrated, for example voice, instant messaging, presence information, audio, web and videoconferencing services, voicemail, to name but some. One or more platforms may be used for this purpose. In some cases, a unified communications system may allow an individual to send a message on one medium or service and to receive the same message on another medium or service.

A unified communications system may typically be implemented by users installing a client application on their own equipment, for example on their computer and/or mobile telephone, which enables communication with other users of the communications system via a centralised server running a corresponding server application. The server application may store presence information associated with users of the unified communications system, for example those having the client application installed on a device and/or who have registered with the system; presence information is a form of status indicator that indicates a user's ability and willingness to communicate. For example, a particular user may update, via their client application, the presence information to "Do Not Disturb" or "Busy" to indicate that they are not willing to communicate. Other such indicators may include "online", "offline", "on holiday", "unavailable" and so on. Graphical indicators may be used instead of, or in addition to, alphanumeric text.

The server application, upon receiving the update, changes the presence associated with the user's identity such that other users of the network may see the presence information when they log into the server service via their own client application. For example, users will typically maintain a contact list for a limited number of other users, and the presence information for the one or more other users in the contact list may be displayed with, or as part of, the contact list.

### Summary

A first aspect of the invention provides a method for providing status information to users of a communications system, the method comprising: receiving from a first user equipment, associated with a first user of the communications system, data indicative of a local time zone based on the current location of the first user equipment; and providing status data to one or more other user equipment, associated with other users of the communications system, based on the local time zone data for the first user.

The data indicative of the local time zone may be generated automatically at the first equipment using signals received from a mobile telecommunications network at the current location of the first user equipment. Alternatively, the data indicative of the local time zone may be user selected manually at the first user equipment.

The status data may comprise data indicative of the local time zone for the first user.

The status data may comprise data indicative of the local time for the first user.

The method may further comprise determining one or more other users of the communications system having an associated contact list which includes the first user or the first user equipment, and wherein the status data for the first user may be provided to one or more other user equipments associated with said one or more other users.

A set of presence information may be provided for users of the communications system, the status data comprising at least part of the presence information for the first user.

The provided status data may be displayed as part of, or alongside, a contact list for said one or more other users on a user interface of their respective user equipment(s).

The provided status data may be displayed substantially adjacent or overlying a selectable portion of a user interface for the one or more other user equipments, the selectable portion being for initiating communications with the first user.

One or more rules may be provided based on the status data for enabling or inhibiting functions associated with the first user.

The one or more rules may be dependent on the difference between the local time zone of the first user and the local time zone of the one or more other users.

The one or more rules may inhibit certain types of communication functions based on the local time zone of the first user and/or the difference between the local time zone of the first user and the local time zone of the one or more other users.

The one or more rules may inhibit one or more of voice calls, and tele or video -conferencing calls to the first user.

The one or more rules may inhibit functions for only a selected subset of one or more other users.

A second aspect of the invention provides a method for providing status information to users of a communication system, the method comprising: at a first user equipment, associated with a first user of the communications system, automatically determining data indicative of a local time zone based on the current location of the first user equipment; and sending status data, based on the determined local time zone data, to a remote system for provision to one or more other user equipment, associated with other users of the communication system.

A third aspect of the invention provides an apparatus or system configured to perform the method of any preceding method definition.

A fourth aspect of the invention provides a non-transitory computer-readable medium having stored thereon computer-readable code, which, when executed by at least one processor, causes the at least one processor to perform a method for providing status information to users of a communications system, comprising: receiving from a first user equipment, associated with a first user of the communications system, data indicative of a local time zone based on the current location of the first user equipment; and providing status data to one or more other user equipment, associated with other users of the communications system, based on the local time zone data for the first user.

A fifth aspect of the invention provides a non-transitory computer-readable medium having stored thereon computer-readable code, which, when executed by at least one processor, causes the at least one processor to perform a method for providing status information to users of a communication system, comprising: at a first user equipment, associated with a first user of the communications system, automatically determining data indicative of a local time zone based on the current location of the first user equipment; and sending status data, based on the determined local time zone data, to a remote system for provision to one or more other user equipment, associated with other users of the communication system.

A sixth aspect of the invention provides an apparatus, the apparatus having at least one processor and at least one memory having computer-readable code stored thereon which when executed controls the at least one processor to provide status information to users of a communications system by receiving from a first user equipment, associated with a first user of the communications system, data indicative of a local time zone based on the current location of the first user equipment; and providing status data to one or more other user equipment, associated with other users of the communications system, based on the local time zone data for the first user.

A seventh aspect of the invention provides an apparatus, the apparatus having at least one processor and at least one memory having computer-readable code stored thereon which when executed controls the at least one processor to: at a first user equipment, associated with a first user of the communications system, automatically determine data indicative of a local time zone based on the current location of the first user equipment; and send status data, based on the determined local time zone data, to a remote system for provision to one or more other user equipment, associated with other users of the communication system.

### Brief Description of the Drawings

Exemplary embodiments of the invention are described below with reference to the accompanying drawings, in which:
Figure 1 is a block diagram of a plurality of user terminals connected to a unified communications system via a network;
Figure 2 is a schematic diagram of components of the Figure 1 unified communications system;
Figure 3 is a schematic diagram of data modules used in a database of the Figure 1 unified communications system;
Figure 4 is a schematic diagram of components of one or more user terminals of Figure 1;
Figure 5 is a schematic diagram of the Figure 1 user terminals in different geographic locations;
Figure 6 is a graphical view of a user interface associated with a unified communications client, associated with the one or more user terminals, in accordance with embodiments;
Figure 7 is a flow diagram showing steps performed by the unified communications system, in accordance with embodiments;
Figure 8 is a flow diagram showing steps performed by the unified communications client, associated with the one or more user terminals, in accordance with embodiments;
Figure 9 is a flow diagram showing steps performed by the unified communications system, in accordance with other embodiments;
Figure 10 is a flow diagram showing steps performed by the unified communications client, in accordance with other embodiments;
Figure 11 is a flow diagram performed by the unified communications system, in accordance with other embodiments;
Figure 12 is a graphical view of a further user interface associated with the unified communications client, in accordance with embodiments;
Figure 13 shows the Figure 6 user interface, modified with additional information, in accordance with other embodiments; and
Figure 14 is a graphical view showing part of the Figure 13 user interface with an additional pop-up display, in accordance with other embodiments.

### Detailed Description of the Embodiments

In the description and drawings, like reference numerals refer to like elements throughout.

Embodiments herein relate to methods and systems for communications between users of a unified communications system or, alternatively, a unified communications and collaboration system (UCC.) Each refers to the integration of a plurality of enterprise communication technologies, for example voice, instant messaging, presence information, audio, web and videoconferencing services, to name but some. One or more platforms may be used for this purpose. In some cases, a unified communications system may allow an individual to send a message on one medium or service and another to receive the same message on another medium or service. The application of embodiments to UCC as described herein, however, is by way of example and the methods and systems may be applied to other data communications technologies.

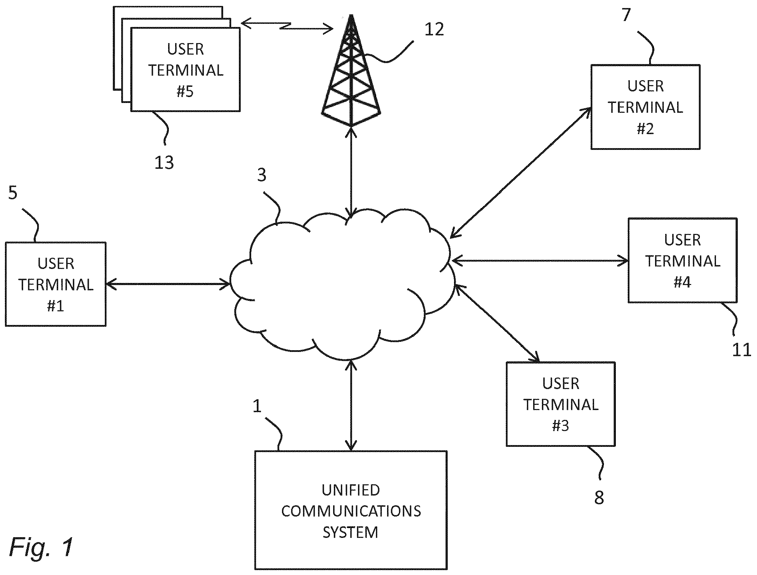

Figure 1 is a block diagram of a typical communications network, including a unified communications system (UCS) 1. The UCS 1 is connected to a data network 3, for example an Internet Protocol (IP) network such as the Internet, for communication with one or more other user terminals or equipment. For example, first to fifth user terminals 5, 7, 8, 11, 13 are connected to the data network 3. Each of the first to fifth user terminals 5, 7, 8, 11, 13 may be, for example, a personal computer (PC), laptop, tablet computer, mobile telephone, smartphone, personal digital assistant (PDA), or a tele or video -conferencing terminal, to give some examples. Any suitable data communications terminal is applicable. For example, the first, second and fourth user terminals 5, 8, 11 may be laptops, the third user terminal 8 a video-conferencing terminal and the fifth user terminal 13 a smartphone which connects to the data network 3 by means a cellular antenna 12 and other related nodes.

The UCS 1 may provide a UCS platform by which the first to fifth terminals 5, 7, 8, 11, 13 may communicate with one another using one or more UCS applications. The UCS 1 may typically be a server, a plurality of servers, a computer, or a plurality of computers, arranged to provide a centralised platform by which respective users of said first to fifth terminals 5, 7, 8, 11, 13 may communicate using one or more communications functions, such as voice, instant messaging, presence information, audio, web and videoconferencing services, to name but some.

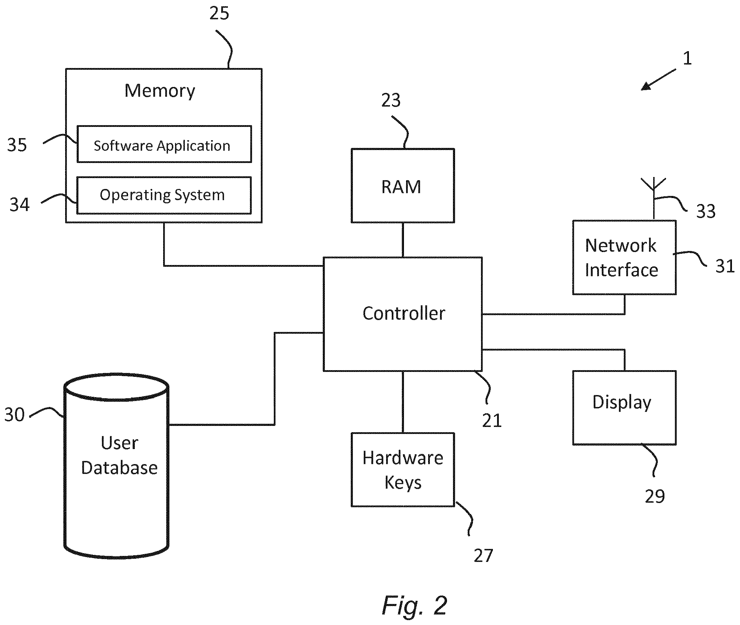

Referring to Figure 2, components of the UCS 1 are shown. The UCS 1 may comprise a controller 21, RAM 23, a memory 25, and, optionally, hardware keys 27 and a display 29. The UCS 1 may comprise a network interface 31, which may be a data port for connecting the system to the network 3.

The network interface 31 may additionally or alternatively comprise a radiofrequency wireless interface for transmitting and/or receiving data using a wireless communications protocol, e.g. WiFi. An antenna 33 may be provided for this purpose.

A user database 30 for storing data associated with one or more registered users or their associated user terminal(s) may also be provided and connected to the controller 21.

The memory 25 may be a non-volatile memory such as read only memory (ROM), a hard disk drive (HDD) or a solid state drive (SSD). The memory 25 stores, amongst other things, an operating system 34 and may store software applications 35. The RAM 23 is used by the controller 21 for the temporary storage of data. The operating system 34 may contain code which, when executed by the controller 21 in conjunction with the RAM 23, controls operation of each of the hardware components of the UCS 1.

The controller 21 may take any suitable form. For instance, it may be a microcontroller, plural microcontrollers, a processor, or plural processors.

In some embodiments, the UCS 1 may also be associated with external software applications not stored on the UCS. These may be applications stored on a remote server device and may run partly or exclusively on the remote server device. These applications may be termed cloud-hosted applications.

The software application 35 may provide a UCS platform, namely one or more software functions for enabling communication between the first to fifth terminals 5, 7, 8, 11, 13 in accordance with methods to be explained below.

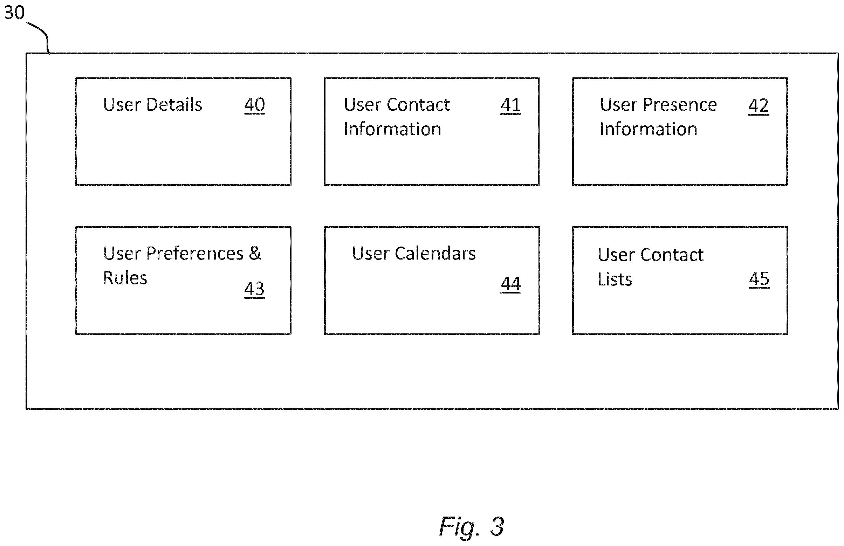

Referring to Figure 3, the user database 30 is configured to store and update a plurality of data modules 40 - 45. A first data module 40 stores user details for users registered with the UCC 1. For example, the first data module 40 may store, for each user, a user ID and user name. A second data module 41 stores user contact data, for example telephone number(s) (landline, mobile, work), email address, website, address etc. A third data module 42 stores user presence information reflecting the user's status, for example "available", "busy", "do not disturb", "in a meeting", "on leave", "out of hours" or "sleeping." The user presence information may be updated manually by users or updating may be performed automatically based on time zone data, as will be explained later on. A fourth data module 43 stores user preferences and rules, for example rules determining which communications functions are enabled or inhibited based on the presence or status information. A fifth data module 44 stores calendar information for each user, for example dates and times of meetings, appointments and so on. A sixth data module 45 stores contact lists of other registered users that each respective user has added to their personal list.

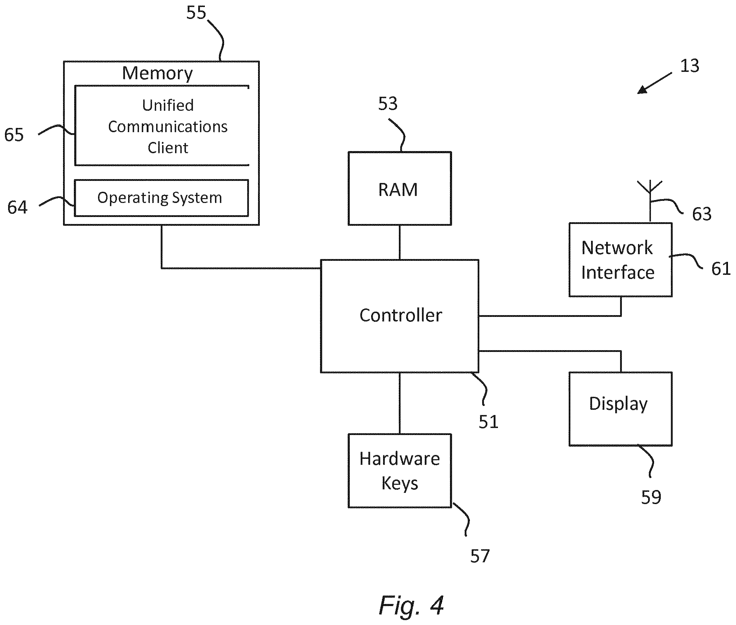

Referring to Figure 4, components of the fifth user terminal 13 (by way of example) are shown. The fifth user terminal 13 may comprise a controller 51, RAM 53, a memory 55, hardware keys 57 and a display 59. The fifth user terminal 13 may comprise a network interface 61 for connecting the system to the network 3.

The network interface 61 may comprise a radiofrequency wireless interface for transmitting and/or receiving data using cellular telecommunications protocols, e.g. GSM, 3G, 4G, 5G and other wireless protocols such as Bluetooth and WiFi. An antenna 63 may be provided for this purpose.

The memory 55 may be a non-volatile memory such as read only memory (ROM), a hard disk drive (HDD) or a solid state drive (SSD). The memory 55 stores, amongst other things, an operating system 64 and may store software applications 65. The RAM 53 is used by the controller 51 for the temporary storage of data. The operating system 64 may contain code which, when executed by the controller 51 in conjunction with the RAM 53, controls operation of each of the hardware components of the fifth user terminal 13.

The controller 51 may take any suitable form. For instance, it may be a microcontroller, plural microcontrollers, a processor, or plural processors.

In some embodiments, the fifth user terminal 13 may also be associated with external software applications not stored on the terminal. These may be applications stored on a remote server device and may run partly or exclusively on the remote server device. These applications may be termed cloud-hosted applications.

The software application 65 provides a UCS client, namely one or more software functions for receiving and transmitting data with the UCS 1, particularly the UCS platform, and the first to fourth terminals 5, 7, 8, 11 in accordance with methods to be explained below.

It will be appreciated that the other, first to fourth user terminals 5, 7, 8, 11 may comprise the same or similar functions and features as the fifth user terminal 13.

In some embodiments, the UCS client 65 is configured to determine the local time zone based on the geographical location of the fifth or other respective terminal 13, and to transfer the time zone data to the UCS 1, or more particularly, the UCS platform 35. For example, because the fifth terminal 13 is a smartphone with cellular capability, it receives timestamp data from a local cellular network whenever it is switched on. Therefore, if the user of the fifth terminal 13 is travelling by air from one time zone to another, the UCS client 65 will, upon the user landing and powering the terminal, receive data from the new cellular network and provide the updated time zone data to the UCS platform 35.

The time zone data may be data indicative of one of a plurality of time zones, data indicative of the actual time, or data from which the UCS platform 35 can derive the local time zone.

It will be appreciated that time zone data may update in other types of user terminal. For example, tablet computers with cellular capability will receive timestamp data in the same way as a smartphone. For example, PCs and laptops running certain operating systems (e.g. Microsoft Windows 10) may derive time zone data automatically using data received from the Internet.

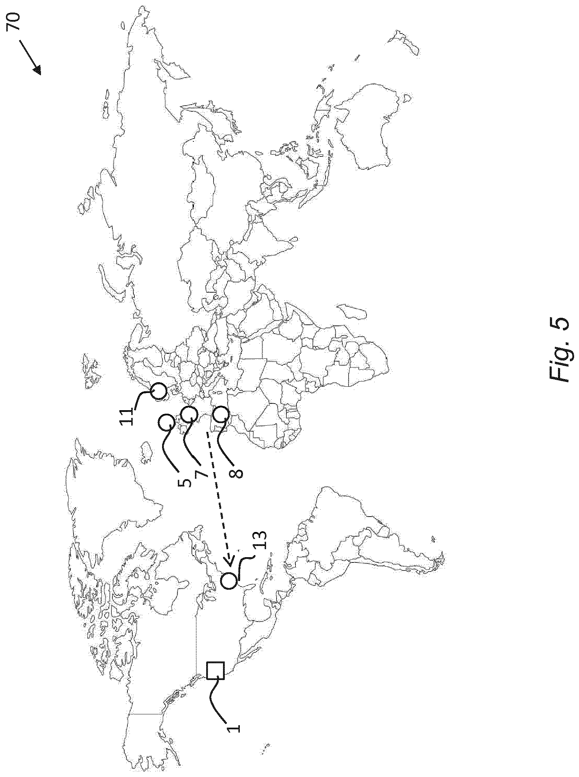

With reference to Figure 5, it is assumed that each of the first to fifth user terminals 5, 7, 8, 11, 13 is associated with a respective user belonging to an organization spread across multiple geographic locations. The users may frequently travel across different time zones and communicate collaboratively using the UCS 1, which happens to be hosted on the west coast of the United States. As shown, each of the users and their respective first to fifth user terminals 5, 7, 8, 11, 13 are located in different locations. The first to third user terminals 5, 7, 8 are in a first time zone. The fourth user terminal 11 is in a different time zone (one hour ahead of the first time zone.) The user of the fifth terminal 13 in this case has recently travelled from the United Kingdom to the east coast of the United States. Accordingly, said user will also be in a different time zone (five hours behind the first time zone.)

The difference in time zones can cause problems and technical inefficiencies. For example the user of the fifth user terminal 13 may be asleep when one or more other users attempt to communicate. If the user of the fifth user terminal 13 does not manually update his or her presence information to indicate that they are unavailable to accept or respond to a voice call, for example, then attempts to contact said user are likely to go unanswered. Processing resources and bandwidth is wasted. Said user may also be disturbed whilst sleeping.

To deal with such problems, the local time zone data received by the UCS 1 from the fifth user terminal 13 is employed as a form of status data for said user's presence information to be updated automatically. The updated presence information may be in addition to existing presence information, or may replace it. The update presence information is updated and stored by the UCS platform 35 and in the third data module 42 shown in Figure 3. Further, the updated presence information is provided to one or more of the first to fourth user terminals 5, 7, 8, 11.

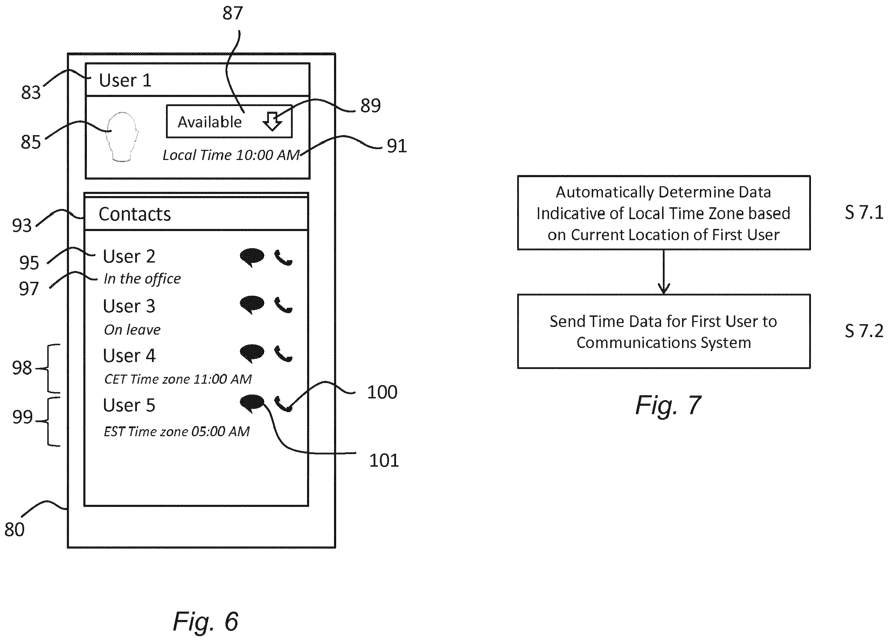

Figure 6 shows a graphical user interface 80 associated with the UCS client 65 when operated on the first user terminal 5, associated with a first user. A similar user interface will be displayed when the UCS client 65 is operated on the second to fifth user terminals 7, 8, 11, 13 associated with respective other users. The user interface 80 displays in respective sections the first user's name 83, a photograph or avatar 85 for the first user, a manual presence menu 87 with associated pull-down function 89 and the local time 91. Note that the local time 91 is 10:00 am, given the time zone in which the first user terminal 5 is located.

Further provided on the user interface 80 is a contacts list 93. The contacts list 93 displays one or more other users that the first user has added to their list, stored in the sixth data module shown in Figure 3. For each other user in the contact list 93, there is displayed a name 95 and their respective presence or status information 97. In the case of the fourth and fifth users 98, 99, the corresponding presence information automatically informs the first user that they are in a different time zone to the first user, and what the time actually is. The first user is therefore informed visually of the fact that certain other users in their contact list 93 are in a different geographic location which may avoid or minimise the chance of the first user initiating a communication function that will be unanswered (thereby wasting resources) or will disturb the other user(s).

In some embodiments, only the time zone may be displayed, e.g. CET or EST or similar. In some embodiments, only the time may be displayed, e.g. 05:00 AM. In the shown example, both are displayed.

Further provided on the user interface 80, alongside each contact in the contacts list 93, are one or more function buttons 100, 101 respectively for initiating a voice call and instant message facility to the respective contacts. Initiating the respective function is by means of a one-click action using a mouse or similar input device. Other function buttons may be provided, e.g. for tele or video -conferencing. One or more of the function buttons 100, 101 may be disabled in the event that the local time zone indicates that the user is unavailable, e.g. at night time.

Figure 7 is a flow diagram showing steps performed by the UCS client 65 of each of the first to fifth user terminals 5, 7, 8, 11, 13. A first step S7.1 comprises automatically determining data indicative of the local time zone based on the current location of the first user. A second step S7.2 comprises sending the time data to the communications system, e.g. the UCS 1. In some embodiments, the data indicative of the local time zone may be determined by user selection, i.e. manually if the terminal cannot perform an automatic update.

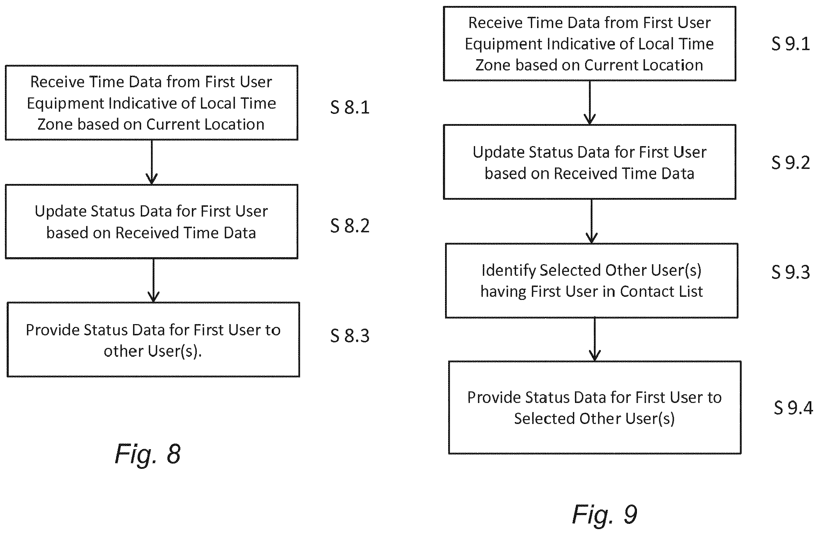

Figure 8 is a flow diagram showing steps performed by the UCS 1, or more particularly its software platform. A first step S8.1 comprises receiving the status data from a first user equipment indicative of the local time zone based on current location. A second step S8.2 comprises updating the status data for the first user based on the received status data. A third step S8.3 comprises providing the status data for the first user to one or more other users.

Figure 9 is a flow diagram showing steps performed by the UCS 1 in another embodiment. First and second steps S9.1, S9.2 correspond with steps S8.1, 8.2. A third step S9.3 comprises identifying selected other user(s) having the first user in their respective contact lists. A fourth step S9.4 comprises providing status data for the first user to the selected one or more other users.

The processes of Figures 8 and 9 differ only in that the former does not restrict status updates to those other users having the first user in their contact list. Any other user attempting to initiate contact with the first user, e.g. by typing-in their mobile number, may subsequently be provided with the status data.

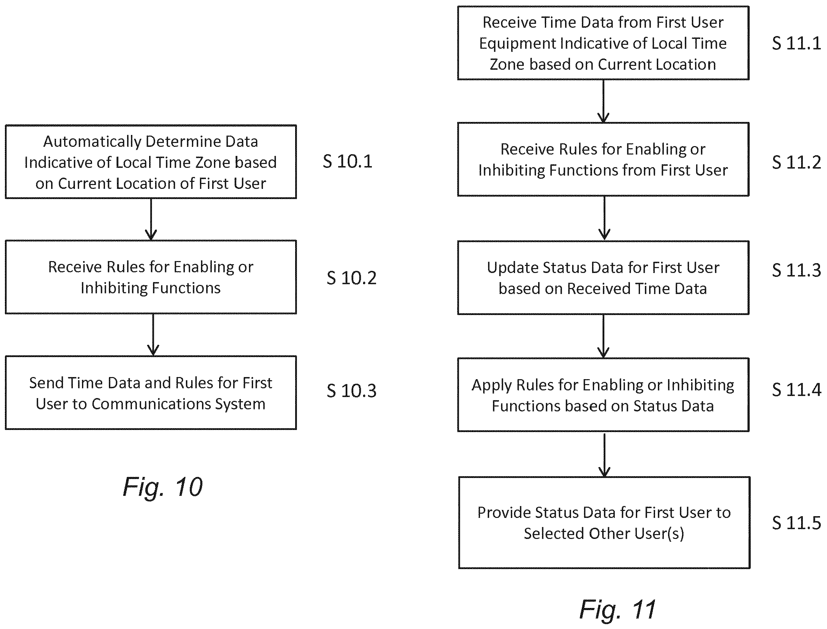

Figure 10 is a flow diagram showing steps performed by the UCS client 65 of each of the first to fifth user terminals 5, 7, 8, 11, 13 in another embodiment. A first step S10.1 corresponds with step 7.1. A second step S10.2 comprises receiving one or more rules for enabling or inhibiting functions, e.g. associated with the first user. A third step S10.3 comprises sending the time data and the one or more rules for the first user to the communications system, e.g. the UCS 1.

The rules may for example determine that one or more selected contacts may be communicated with (and/or using selected methods) during particular times, whereas other contacts may not. The rules therefore provide a form of filtering.

Figure 11 is a flow diagram showing steps performed by the UCS 1 in another embodiment. A first step S11.1 corresponds with step S9.1. A second step S11.2 comprises receiving rules for enabling or inhibiting functions from the first user. A third step S11.3 corresponds with step S9.2. A fourth step S11.4 comprises applying the rules for enabling or inhibiting functions based on the status data. A fifth step S11.5 corresponds with step S9.4.

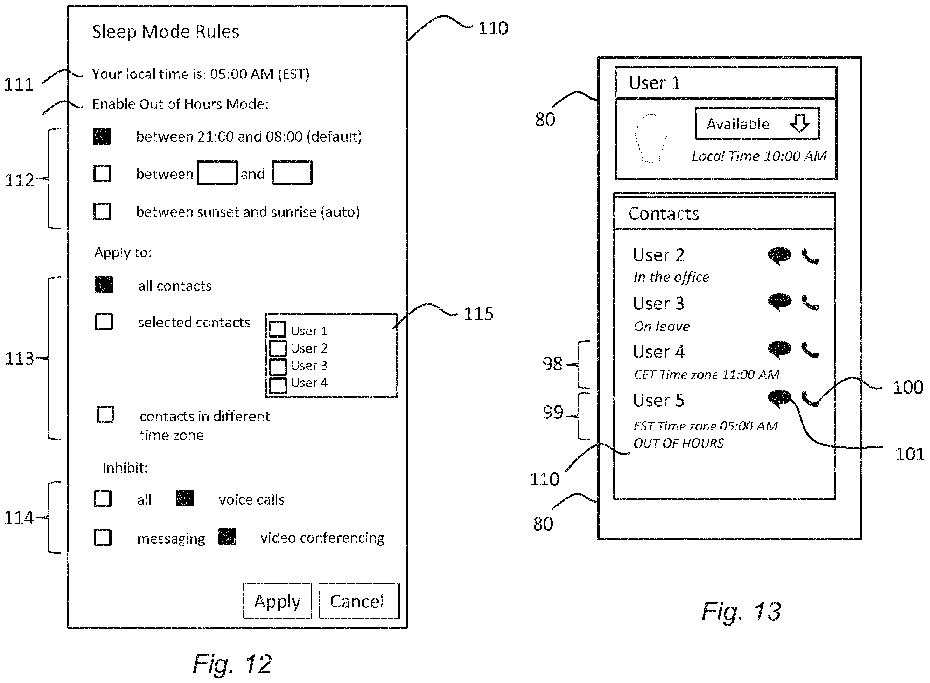

Figure 12 shows a further graphical user interface 110 associated with the UCS client 65 when operated on, in this case, the fifth user terminal 13. A similar user interface will be displayed when the UCS client 65 is operated on the first to fourth user terminals 7, 8, 11, 13. The further user interface 110 is used to set one or more rules to be applied by the UCS 1 based on the status data. The further user interface 110 may display the local time 111, an "enable out of hours mode" (or alternatively, sleep mode) setting 112, an "apply to" setting 113 and an "inhibit" setting 114.

The "enable out of hours mode" setting 112 enables users to enable a so-called out of hours mode either between a default setting, e.g. between 21:00 pm and 08:00 am, between a custom setting entered via alphanumeric boxes for start and end times, or between sunset and sunrise determined based on the local time zone. The sunset and sunrise times for the local area may be acquired from the Internet. In this example, the fifth user has selected the default setting.

The "apply to" setting 113 enables users to select which contacts the out of hours mode is to be notified to. Users may select between all contacts or a selected set of contacts, e.g. selected through the contact box 115. In this example, the fifth user has selected all contacts.

The "inhibit" setting 114 enables users to select an inhibiting (or disabling) action to one or more communication functions, e.g. by selecting "all" or one or more of voice calls, messaging and video conferencing. Other communication functions may be provided. In this example, the fifth user has selected only voice calls and video conferencing.

Figure 13 again shows the graphical user interface 80 associated with the UCS client 65 when operated on the first user terminal 5. A similar user interface will be displayed when the UCS client 65 is operated on the second to fifth user terminals 7, 8, 11, 13 associated with respective other users. In this case, reference numeral 110 indicates graphically that the first user is in an out of hours mode, based on the rules previously provided. There is therefore provided an automatic visual alert that the user cannot currently be contacted, thereby avoiding, or minimizing, the wastage of communications resources.

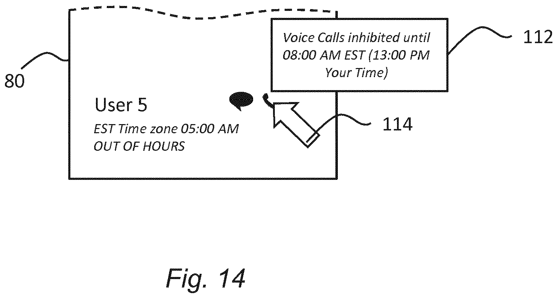

Figure 14 shows a partial section of the graphical user interface 80 shown in Figure 13, when the first user attempts to make a voice call with the fifth user. Based on the rules previously provided, voice calls are inhibited. Therefore, a pop-up window 112 may appear responsive to the first user attempting to initiate the voice call, notifying that such calls are inhibited. The pop-up window 112 may appear responsive to the cursor 114 hovering over the voice call function button 100, or it may appear responsive to clicking or otherwise selecting said function. The UCS 1 may prevent any such call being made. The UCS 1 may divert the call to the voice mail facility of the fifth user.

There is therefore described a method and system for time zone based presence, whereby the local time for a particular user, automatically derived by means of one or more user terminals, is notified to one or more other users. The notification may be automatic, for example when selected other users are associated with the first user, e.g. through a contact list. The notification may be displayed visually alongside the first user's name or other identifying data. The notification may alternatively, or additionally, be provided in any suitable manner, e.g. audibly. The notification may automatically cause inhibiting or disablement of certain functions based on the time zone. For example, during certain time periods, one or more functions may be disabled. For example, during night-time hours, voice calls may be inhibited. In some cases, this may be applied to only a subset of other users.

The method and system provides an intuitive way of preventing the wastage of processing and bandwidth resources, as well as users being needlessly disturbed during certain times.

An example UCS 1 that may be employed is Mitel Networks Corporation's MiCollab ™.

It will be appreciated that the above described embodiments are purely illustrative and are not limiting on the scope of the invention. Other variations and modifications will be apparent to persons skilled in the art upon reading the present application.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

## Claims

1. A method for providing status information to users of a communications system, the method comprising:
receiving from a first user equipment, associated with a first user of the communications system, data indicative of a local time zone based on the current location of the first user equipment; and
providing status data to one or more other user equipment, associated with other users of the communications system, based on the local time zone data for the first user.

2. The method of claim 1, wherein the data indicative of the local time zone is generated automatically at the first equipment using signals received from a mobile telecommunications network at the current location of the first user equipment.

3. The method of claim 1 or claim 2, wherein the status data comprises data indicative of the local time zone for the first user.

4. The method of any preceding claim, wherein the status data comprises data indicative of the local time for the first user.

5. The method of any preceding claim, further comprising determining one or more other users of the communications system having an associated contact list which includes the first user or the first user equipment, and wherein the status data for the first user is provided to one or more other user equipments associated with said one or more other users.

6. The method of claim 5, wherein a set of presence information is provided for users of the communications system, the status data comprising at least part of the presence information for the first user.

7. The method of claim 5 or claim 6, wherein the provided status data is displayed as part of, or alongside, a contact list for said one or more other users on a user interface of their respective user equipment(s).

8. The method of any preceding claim, wherein the provided status data is displayed substantially adjacent or overlying a selectable portion of a user interface for the one or more other user equipments, the selectable portion being for initiating communications with the first user.

9. The method of any preceding claim, wherein one or more rules are provided based on the status data for enabling or inhibiting functions associated with the first user.

10. The method of claim 9, wherein the one or more rules are dependent on the difference between the local time zone of the first user and the local time zone of the one or more other users.

11. The method of claim 9 or claim 10, wherein the one or more rules inhibit certain types of communication functions based on the local time zone of the first user and/or the difference between the local time zone of the first user and the local time zone of the one or more other users.

12. The method of claim 11, wherein the one or more rules inhibit one or more of voice calls, and tele or video -conferencing calls to the first user.

13. The method of any of claims 8 to 11, wherein the one or more rules inhibit functions for only a selected subset of one or more other users.

14. A method for providing status information to users of a communication system, the method comprising:
at a first user equipment, associated with a first user of the communications system, automatically determining data indicative of a local time zone based on the current location of the first user equipment; and
sending status data, based on the determined local time zone data, to a remote system for provision to one or more other user equipment, associated with other users of the communication system.

15. A system configured to perform the method of any preceding claim.
